# EUROPEAN PATENT SPECIFICATION

(11) **EP 1 642 187 B1**
(45) Date of publication and mention of the grant of the patent: **07.05.2008**
(21) Application number: 04744421.1
(22) Date of filing: 29.06.2004
(51) Int. Cl.: G06F 21/06

(54) **DIGITAL SELF-ERASURE OF KEY COPY-PROTECTED STORAGE**
DIGITALE EIGEN-LÖSCHUNG EINES DURCH EINEN SCHLÜSSEL KOPIER-GESCHÜTZEN SPEICHERS.
AUTO-EFFACEMENT NUMERIQUE D'UN ENREGISTREMENT PAR CLE PROTEGE CONTRE LA COPIE

(30) Priority: 30.06.2003 US 483778 P
(43) Date of publication of application: 05.04.2006
(73) Proprietor: NXP B.V., 5656 AG Eindhoven (NL)
(72) Inventor: NG, Sheau-Bao, Briarcliff Manor, New York 10510-8001 (US); SHEN, Richard Chi -Te, Briarcliff Manor, New York 10510-8001 (US)
(74) Representative: White, Andrew Gordon
(86) International application number: PCT/IB2004/051049
(87) International publication number: WO 2005/001673

(56) References cited:
- WO-A-02/05098
- US-B1- 6 292 899

## Description

The invention is related to the field of copy protection of digital content.

Digital storage modules are increasingly being used for storing digital content such as video, music and pictures. In many applications, such as MP3 (MPEG audio layer 3) players and PVRs (Personal Video Recorders), it is essential that the content be downloaded and stored in a storage module of the local device. Content providers are allowing paying subscribers to download content that is protected by copy right. The subscribers have no right to further distribute the content, but illegal copying has become so epidemic that it is discouraging providers from providing content for subscriber download.

Content providers are looking for ways to prevent pirates from illegally distributing the downloaded content. Previously proposals to prevent illegal copying of downloaded content have not been satisfactory. Most proposals have depended on encryption of the downloaded material, but even technically unsophisticated copiers have been able to circumvent such protections. For example, A hard disc drive module used in a PVR can be removed and the encrypted contents duplicated.

US 6,292,899 describes a data security system for safeguarding confidential data stored in a computer system memory. A master file is stored in a first memory. A master key that is used to encrypt and decrypt the master file is stored in a volatile key apparatus. When a violation of the system security procedures is detected, the master key is erased from the volatile key apparatus.

WO-A-02/05098 discloses a methode as specified in the preamble of claim 1.

A first aspect of the present invention provides a method as defined in claim 1. In the invention herein, a storage module is provided with multiple portions of memory including a first portion and a second portion. Content is stored in the first portion and information is stored in the second portion that is required in order to access the content stored in the first portion. Preferably, when unauthorized use of the storage module is detected, then the second portion is blank erased so the content can not be used.

Blank erasing data is destroying data by, for example, overwriting the data with blanks, so that the data can not be recovered. Normally when data in a storage module is erased the data itself is not modified, but a flag is marked to indicate that the location of the data is free for writing data into. One of the advantages of only blank erasing the second portion and not the first portion is that normal memory management can be used for the first portion and the special blank erasing procedure only has to be available for the second portion. Another advantage is that blank erasing may take much longer than marking that the memory position is available.

The unauthorized use includes removal of the storage module from the device containing the storage module such as a VCR or MP3 player. The unauthorized use may also be breaking open of the device or the module or the unauthorized use may be an attempt to read data from the module while the module is disconnected from the device.

A further aspect of the present invention provides a storage module as defined in claim 5. Further embodiments of the invention are specified in the appended dependent claims.

Additional aspects and advantages of the invention will become readily apparent to those skilled in the art from the detailed description below with reference to the following drawings.
Figure 1 is a flow diagram of the method of the invention.
Figure 2 is a schematic of the system of the invention including a playing device and the connected module.

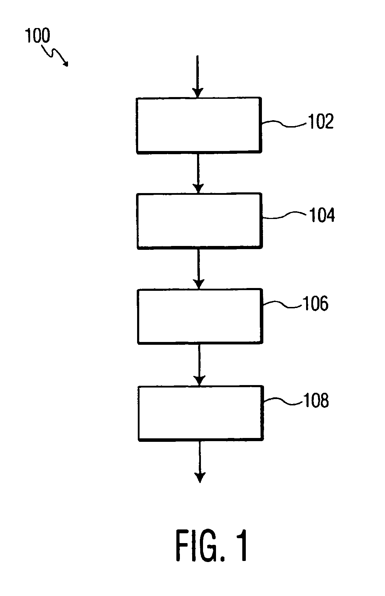

Figure 1 illustrates a flow chart of an example of the method of the invention. In step 102, multiple portions of memory are provided in a storage module. The portions of memory include a first portion for containing content and a second portion containing information that must be accessed in order to access the content stored in the first portion. In step 104, unauthorized use of the storage module is detected. The detection can include detecting: disconnection of the module from a portion of a device to which the module is connected, opening of the module, opening of the device, or attempting to access the information stored in the module while the module is not connected to an authorized device.

The digital storage module may be, for example, a hard disc drive module or a non-volatile memory module, such as a flash card.

In step 106, access to the information in the second portion after the unauthorized use is detected is prevented. Access can be prevented for example by blank erasing a private key stored in the second section that is required for decrypting the content stored in the first section. Access could also be prevented by blank erasing a table of contents of the first portion of memory that is stored in the second portion of memory.

In step 108 a power source is provided for the detecting and preventing of access, the access also being prevented if the power source fails. Commonly a battery would be used for such a power source, and the battery could be interconnected such that when the battery died then access would be prevented.

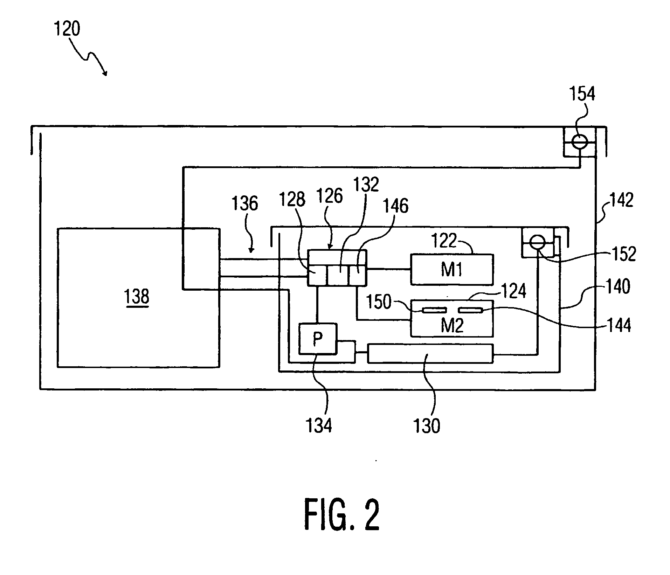

Figure 2 is a schematic of the system of the invention including a playing device and the connected storage module. The storage module contains multiple portions of memory including a first portion (122) and a second portion (124). The storage module also contains a processors 126 containing programming modules to operate the module. The programming modules include an access control module 128 for preventing access to content stored in the first portion of memory without accessing information stored if the second portion of memory. The module contains detecting apparatus 130 for detecting unauthorized use of the storage module.

The processor also contains a protection module 132 for preventing further access of the information stored in the first portion of the memory after unauthorized use is detected. The protection module may simply blank erase the contents of the second module whenever unauthorized use is detected. A power source 134 is provided in the module for operating the detecting apparatus and processor containing the protecting module. The protecting module preventing further access to the information stored in the first portion of the memory after the power source fails.

The unauthorized use of the storage module may include unauthorized disconnection of the storage module from a device that uses the storage module. In that case, the protecting apparatus 130 monitors the continuity of the connection 136 between the module and a portion 138 of the playing device. Whenever disconnection is detected then the protecting module 132 blank erases the second portion of the memory.

The unauthorized use of the storage module may include unauthorized opening of an enclosure 140 of the storage module. In that case, the protecting apparatus 130 monitors the integrity of the module enclosure. For example, an opening detector 152 can be connected between portions of the module enclosure and if the portions of the module enclosure are separated then opening will be detected. Whenever unauthorized opening of the module enclosure is detected then the protecting module 132 blank erases the second portion of the memory.

The unauthorized use of the storage module may include unauthorized opening of an enclosure 142 of the playing device. In that case, the protecting apparatus 130 monitors the integrity of the playing device enclosure. For example, an opening detector 154 can be connected between portions of the device enclosure and if the portions of the device enclosure are separated then opening will be detected. Whenever unauthorized opening of the device enclosure is detected then the protecting module 132 blank erases the second portion of the memory.

The information stored in the second portion that has to be accessed in order to access the contents may include a private key 144 that must be used to decrypt the content stored in the first portion of the memory in order to access the content. The storage module may contain a data decryption module 146 of processor 126 for using the private key stored in the second portion of the memory for decrypting data that is stored in the first portion of the memory. Alternately or in addition to the private key, the information stored in the second portion of the memory may include a table of contents that is necessary to play the content stored in the first portion of the memory.

## Claims

1. A method, comprising:
providing multiple portions of memory (122, 124) in a storage module (140), the portions including a first portion (122) for containing content and a second portion (124) containing information that must be accessed in order to access content stored in the first portion;
detecting unauthorized use of the storage module;
preventing access to the information in the second portion (124) after the unauthorized use is detected;
providing a power source (134) in the storage module for the detecting and preventing of access, access also being prevented if the power source fails;
the method being **characterised in that** the detecting of unauthorized use includes detecting unauthorized disconnection of the storage module (140) from a device (138) that uses the storage module.

2. The method of claim 1, wherein access to the information in the second portion (124) is prevented by blank erasing the information in the second portion when unauthorized access is detected.

3. The method of claim 1, wherein detecting unauthorized use includes detecting unauthorized opening of an enclosure (140) of the storage module.

4. The method of claim 1, wherein detecting unauthorized use includes detecting unauthorized opening of an enclosure of a device (142) containing the storage module.

5. A storage module, comprising:
multiple portions of memory including a first portion (122) and a second portion (124) of the memory;
access control means (128) for preventing access to content stored in the first portion of memory without accessing information stored if the second portion of memory;
means (130) for detecting unauthorized use of the storage module; and
protection means (132) for preventing further access to the information stored in the second portion of the memory after unauthorized use is detected; and
a power source (134) for operating the detecting means and protection means, the protection means also preventing further access to the information stored in the second portion of the memory after the power source fails,
and **characterised in that** the detecting means (130) is arranged to detect unauthorized disconnection of the storage module from a device that uses the storage module.

6. The storage module of claim 5, wherein the detecting means (130) monitors a connection (136) between the storage module and the device that uses the storage module and the protecting means blank erases the information stored in the second portion of the memory when unauthorized disconnection of the storage module from the device is detected.

7. The storage module of claim 5, wherein:
unauthorized use includes unauthorized opening of an enclosure (140) of the storage module; and
the detecting means monitors the integrity of an enclosure of the storage module and the protecting means blank erases the information stored in the second portion of the memory when unauthorized opening of the enclosure of the storage module is detected.

8. The storage module of claim 5, wherein:
unauthorized use includes unauthorized opening of an enclosure (142) of a device containing the storage module; and
the detecting means monitors the integrity of an enclosure of the device and the protecting means blank erases the information stored in the second portion of the memory when unauthorized opening of the enclosure of the device is detected.

9. The storage module of claim 5, wherein:
the information stored in the second portion includes a private key (144) that can be used to decrypt content stored in the first portion of the memory;
the storage module further comprises a data decrypter (146) for decrypting data that is stored in the second portion of the memory using the private key that is stored in the first portion of the memory.

10. The storage module of claim 5, wherein the information stored in the second portion of the memory includes a table of contents that is necessary to play the content stored in the first portion of the memory.

## Patentansprüche

1. Verfahren, umfassend:
Bereitstellen einer Vielzahl von Speicherabschnitten (122, 124) in einem Speichermodul (140), wobei die Speicherabschnitte einen ersten Abschnitt (122) zum Aufnehmen von Inhalten und einen zweiten Abschnitt (124) enthaltend Informationen, auf die zugegriffen werden muss, um auf die im ersten Abschnitt gespeicherten Inhalte zuzugreifen, beinhalten;
Detektieren eines nichtautorisierten Gebrauchs des Speichermoduls;
Verhindern eines Zugriffs auf die Informationen in dem zweiten Abschnitt (124), nachdem der nichtautorisierte Gebrauch detektiert wurde;
Bereitstellen einer Leistungsquelle (134) zum Detektieren und Verhindern eines Zugriffs, wobei ein Zugriff auch verhindert wird, wenn die Leistungsquelle versagt;
**dadurch gekennzeichnet, dass** das Detektieren eines nichtautorisierten Gebrauchs das Detektieren einer nichtautorisierten Trennung des Speichermoduls (140) von einem Gerät (138), welches das Speichermodul verwendet, durch Überwachen des Fortbestehens der Verbindung zwischen dem Speichermodul und dem Gerät beinhaltet.

2. Verfahren nach Anspruch 1, bei dem der Zugriff auf die Informationen im zweiten Abschnitt (124) durch unwiederherstellbares Löschen der Informationen im zweiten Abschnitt verhindert wird, wenn ein nichtautorisierter Zugriff detektiert wurde.

3. Verfahren nach Anspruch 1, bei dem das Detektieren eines nichtautorisierten Gebrauchs ein Detektieren eines nichtautorisierten Öffnens eines Gehäuses (140) des Speichermoduls beinhaltet.

4. Verfahren nach Anspruch 1, bei dem das Detektieren eines nichtautorisierten Gebrauchs das Detektieren eines nichtautorisierten Öffnens eines Gehäuses eines Gerätes (142) beinhaltet, welches das Speichermodul enthält.

5. Speichermodul, umfassend:
eine Vielzahl Speicherabschnitte, einschließlich eines ersten Abschnitts (122) und eines zweiten Abschnitts (124) des Speichers;
Zugriffssteuerungsmittel (128) zum Verhindern eines Zugriffs auf Inhalte, die im ersten Speicherabschnitt gespeichert sind, ohne Zugriff auf im zweiten Speicherabschnitt gespeicherte Informationen;
Mittel (130) zum Detektieren eines nichtautorisierten Gebrauchs des Speichermoduls; und
Schutzmittel (132) zum Verhindern eines weiteren Zugriffs auf die im zweiten Abschnitt des Speichers gespeicherten Informationen, nachdem ein nichtautorisierter Gebrauch detektiert wurde; und
eine Leistungsquelle (134) zum Betreiben der Detektionsmittel und der Schutzmittel, wobei die Schutzmittel zusätzlich einen weiteren Zugriff auf die im zweiten Abschnitt des Speichers gespeicherten Informationen verhindern, nachdem die Leistungsquelle versagt, **dadurch gekennzeichnet, dass**
das Detektionsmittel (130) ausgebildet ist, eine nichtautorisierte Trennung des Speichermoduls von einem Gerät, welches das Speichermodul verwendet, durch Überwachen des Fortbestehens der Verbindung zwischen dem Speichermodul und dem Gerät zu detektieren.

6. Speichermodul nach Anspruch 5, bei dem das Schutzmittel die im zweiten Abschnitt des Speichers gespeicherten Informationen unwiederherstellbar löscht, wenn eine nichtautorisierte Trennung des Speichermoduls vom Gerät detektiert wird.

7. Speichermodul nach Anspruch 5, bei dem
der nichtautorisierte Gebrauch ein nichtautorisiertes Öffnen eines Gehäuses (140) des Speichermoduls beinhaltet; und
das Detektionsmittel die Unversehrtheit eines Gehäuses des Speichermoduls überwacht, und das Schutzmittel die im zweiten Abschnitt des Speichers gespeicherten Informationen unwiederherstellbar löscht, wenn ein nichtautorisiertes Öffnen des Gehäuses des Speichermoduls detektiert wird.

8. Speichermodul nach Anspruch 5, bei dem
der nichtautorisierte Gebrauch ein nichtautorisiertes Öffnen eines Gehäuses (142) eines Geräts beinhaltet, das das Speichermodul enthält; und
das Detektionsmittel die Unversehrtheit eines Gehäuses des Geräts überwacht und das Schutzmittel die im zweiten Abschnitt des Speichers gespeicherten Informationen unwiederherstellbar löscht, wenn ein nichtautorisiertes Öffnen des Gehäuses des Gerätes detektiert wird.

9. Speichermodul nach Anspruch 5, bei dem
die im zweiten Abschnitt des Speichers gespeicherten Informationen einen privaten Schlüssel (144) enthalten, der verwendet werden kann, um Inhalte zu entschlüsseln, die im ersten Abschnitt des Speichers gespeichert sind; und
das Speichermodul zusätzlich einen Datenentschlüssler (146) zum Entschlüsseln von Daten umfasst, die im ersten Abschnitt des Speichers gespeichert sind, unter Verwendung des privaten Schlüssels, der im zweiten Abschnitt des Speichers gespeichert ist.

10. Speichermodul nach Anspruch 5, bei dem die im zweiten Abschnitt des Speichers gespeicherten Informationen eine Inhaltstabelle enthalten, die notwendig ist, um die Inhalte wiederzugeben, die im ersten Abschnitt des Speichers gespeichert sind.

## Revendications

1. Procédé, comprenant les étapes consistant à :
- fournir plusieurs parties de mémoire (122, 124) dans un module de mémoire (140), les parties comprenant une première partie (122) contenant un contenu et une deuxième partie (124) contenant des informations qui doivent être accessibles afin d'accéder au contenu mémorisé dans la première partie ;
- détecter une utilisation non autorisée du module de mémoire ;
- empêcher l'accès aux informations dans la deuxième partie (124) après la détection de l'utilisation non autorisée ;
- fournir une alimentation (134) pour détecter et empêcher l'accès, l'accès étant également empêché lors d'une défaillance de l'alimentation ;
le procédé étant **caractérisé en ce que** la détection de l'utilisation non autorisée comprend l'étape consistant à détecter une déconnection non autorisée du module de mémoire (140) à partir d'un dispositif (138) qui utilise le module de mémoire, en commandant la continuité de la connexion entre le module de mémoire et ledit dispositif.

2. Procédé selon la revendication 1, dans lequel l'accès aux informations dans la deuxième partie (124) est empêché par un blanc effaçant les informations dans la deuxième partie lorsqu'un accès non autorisé est détecté.

3. Procédé selon la revendication 1, dans lequel la détection de l'utilisation non autorisée comprend l'étape consistant à détecter l'ouverture non autorisée d'un boîtier (140) du module de mémoire.

4. Procédé selon la revendication 1, dans lequel la détection d'une utilisation non autorisée comprend l'étape consistant à détecter une ouverture non autorisée d'un boîtier d'un dispositif (142) contenant le module de mémoire.

5. Module de mémoire, comprenant :
- plusieurs parties de mémoire comprenant une première partie (122) et une deuxième partie (124) de la mémoire ;
- des moyens de commande d'accès (128) pour empêcher l'accès au contenu mémorisé dans la première partie de mémoire sans accéder aux informations mémorisées dans la deuxième partie de mémoire ;
- des moyens (130) destinés à détecter l'utilisation non autorisée du module de mémoire ; et
- des moyens de protection (132) pour empêcher un autre accès aux informations mémorisées dans la deuxième partie de la mémoire après la détection d'une utilisation non autorisée ; et
- une alimentation (134) pour mettre en oeuvre les moyens de détection et les moyens de protection, les moyens de protection empêchant également un autre accès aux informations mémorisées dans la deuxième partie de la mémoire après défaillance de l'alimentation,
et **caractérisé en ce que** les moyens de détection (130) sont conçus pour détecter une déconnexion non autorisée du module de mémoire à partir d'un dispositif qui utilise le module de mémoire, en commandant la continuité de la connexion entre le module de mémoire et ledit dispositif.

6. Module de mémoire selon la revendication 5, dans lequel le blanc des moyens de protection efface les informations mémorisées dans la deuxième partie de la mémoire lorsqu'une déconnexion non autorisée du module de mémoire à partir du dispositif est détectée.

7. Module de mémoire selon la revendication 5, dans lequel :
- l'utilisation non autorisée comprend une ouverture non autorisée d'un boîtier (140) du module de mémoire ; et
- les moyens de détection surveillent l'intégrité d'un boîtier du module de mémoire et le blanc des moyens de protection efface les informations mémorisées dans la deuxième partie de la mémoire lorsqu'une ouverture non autorisée du boîtier du module de mémoire est détectée.

8. Module de mémoire selon la revendication 5, dans lequel :
- l'utilisation non autorisée comprend une ouverture non autorisée d'un boîtier (142) d'un dispositif contenant le module de mémoire ; et
- les moyens de détection surveillent l'intégrité d'un boîtier du dispositif et le blanc des moyens de protection efface les informations mémorisées dans la deuxième partie de la mémoire lorsqu'une ouverture non autorisée du boîtier du dispositif est détectée.

9. Module de mémoire selon la revendication 5, dans lequel :
- les informations mémorisées dans la deuxième partie comprennent une clé privée (144) qui peut être utilisée pour décrypter un contenu mémorisé dans la première partie de la mémoire ;
- le module de mémoire comprend en outre un décrypteur de données (146) pour décrypter des données qui sont mémorisées dans la deuxième partie de la mémoire en utilisant la clé privée qui est mémorisée dans la première partie de la mémoire.

10. Module de mémoire selon la revendication 5, dans lequel les informations mémorisées dans la deuxième partie de la mémoire comprennent une table de contenu qui est nécessaire pour traiter le contenu mémorisé dans la première partie de la mémoire.
